# EUROPEAN PATENT APPLICATION

(11) **EP 3 292 934 A1**
(43) Date of publication of application: **14.03.2018**
(21) Application number: 16789445.0
(22) Date of filing: 21.04.2016
(51) Int. Cl.: B23D 61/02, B23D 47/00, B27B 33/08

(54) **CIRCULAR SAW**

(30) Priority: 07.05.2015 JP 2015094871
(71) Applicant: Kanefusa Kabushiki Kaisha, Niwa-gun, Aichi-ken 480-0192 (JP)
(72) Inventor: NISHIO, Satoru, Niwa-gun Aichi 480-0192 (JP); TAKEYAMA, Ken, Niwa-gun Aichi 480-0192 (JP)
(74) Representative: Kuhnen & Wacker
(86) International application number: PCT/JP2016/002131
(87) International publication number: WO 2016/178307

(57) **Abstract**

In a circular saw blade, cutting teeth are joined to tooth bodies projecting outward in a radial direction at locations on an outer periphery of a disk-shaped metal base, gullets are provided between the tooth bodies so as to be recessed in the radial direction, radial clearance angles of side cutting edges of the cutting teeth are greater than -1° and less than 1°, and a vibration prevention mechanism for preventing vibration of the metal base itself is provided. A ratio of a difference between a maximum value and a minimum value of pitches of the multiple cutting teeth to an average value of the pitches is 40% to 100%. A ratio of a difference between a maximum value and a minimum value of average values of depths of the adjacent gullets to an average value of depths of the gullets may be 20% to 100%.

## Description

### Technical Field

The present invention relates to a circular saw blade for cutting work materials such as wood, wood based panels, resins, and nonferrous metals such as aluminum, and particularly relates to a circular saw blade that decreases the surface roughness of a finished surface of a cut work material.

### Background Art

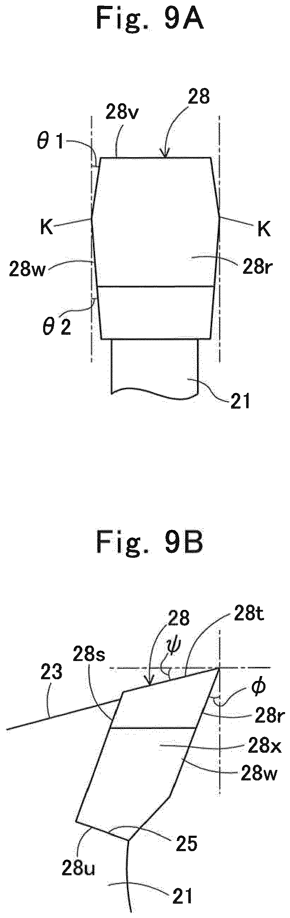

Conventionally, in order to decrease the surface roughness of a finished surface of a work material cut by a circular saw blade to ensure a satisfactory finished surface, for example, as disclosed in Patent Literature 1, bending points are provided at both side cutting edges of each cutting tooth joined to a metal base, so as to project at both lateral sides, the radial clearance angle at the outer peripheral side with respect to each bending point is set to be a negative angle of not less than -1° and less than 0°, and the radial clearance angle at the center side with respect to each bending point is set to be a positive angle of greater than 0° and not greater than 1°. Here, the radial clearance angles are slant angles θ1 and θ2 of a side cutting edge 28w of a cutting tooth 28 relative to the radial direction of a metal base 21 as shown in Fig. 9A, the radial clearance angle θ1 at which the cutting tooth 28 is narrowed in the width direction thereof from a bending point K at the intermediate point toward the outer peripheral side is set to be negative, and the radial clearance angle θ2 at which the cutting tooth 28 is widened in the width direction thereof from the center of the metal base 21 toward the bending point K is set to be positive.

However, when the radial clearance angles of the side cutting edges of the circular saw blade are made small as described above, cutting vibration occurs in a predetermined rotation speed zone of the circular saw blade, and the surface roughness of a finished surface is actually increased. Particularly, when a work material having large friction against the side cutting edges is cut or the radial clearance angles of the cutting teeth are set to be negative, considerable cutting vibration occurs. On the other hand, cutting vibration is inhibited by avoiding this rotation speed zone, but a problem of a decrease in the working efficiency of cutting arises in some cases. The cutting vibration of such a circular saw blade is known to include cutting vibration due to the metal base itself and cutting vibration due to the cutting teeth.

Regarding the cutting vibration due to the metal base itself, the cutting vibration is known to be inhibited by providing slots having various shapes within the metal base and filling the slots with a resin as disclosed in Patent Literature 2. Inaddition, cutting vibration of the metal base is known to be inhibited also by attaching together a plurality of metal bases or attaching a thin vibration-isolating plate to the metal base as disclosed in Patent Literature 3. Cutting vibration of the circular saw blade due to the metal base itself is inhibited by such a vibration prevention mechanism, but inhibition of the cutting vibration due to the cutting teeth themselves is still not achieved. Because of such cutting vibration due to the cutting teeth themselves, a desired finished surface has not been ensured even in the case of attempting to ensure a satisfactory finished surface by decreasing the radial clearance angles of the circular saw blade.

### Citation List

### [Patent Literature]

Patent Literature 1: JP2000-280202 (A)
Patent Literature 2: JP2000-120777 (A)
Patent Literature 3: JP2002-86313 (A)

### Summary of Invention

As a result of thorough investigation for cutting vibration due to cutting teeth as described above, the present inventors have recognized that resonance between the cutting teeth is inhibited and cutting vibration is also inhibited by making an intermittent vibration frequency between the cutting teeth and/or a natural vibration frequency of each tooth portion different, further have found that resonance between the cutting teeth is effectively inhibited by setting the pitches of the cutting teeth and the depths of gullets to an appropriate condition, and have arrived at the present invention. That is, the present invention is intended to solve the above-described problems, and an object of the present invention is to provide a circular sawblade that decreases the surface roughness of a finished surface by inhibiting cutting vibration in cutting aworkmaterial such as wood, wood based panels, resins, and nonferrous metals.

In order to achieve the above object, a first feature of the present invention is a circular saw blade in which cutting teeth are joined to a plurality of tooth bodies projecting outward in a radial direction at a plurality of locations on an outer periphery of a disk-shaped metal base, gullets are provided between the plurality of tooth bodies so as to be recessed in the radial direction, radial clearance angles of side cutting edges of the cutting teeth are greater than -1° and less than 1°, and a vibration prevention mechanism for preventing vibration of the metal base itself is provided, wherein pitches of the multiple cutting teeth are at least partially different, and a ratio of a difference between a maximum value and a minimum value of the pitches to an average value of the pitches is 40% to 100%. The radial clearance angle θ being greater than -1° and less than 1° includes a case where the radial clearance angle entirely satisfies 0° < θ < 1°, and a case where the radial clearance angle at the outer peripheral side of each cutting tooth satisfies -1° < θ ≤ 0° and the radial clearance angle at a center side from a bending point K formed at an intermediate position satisfies 0° < θ < 1°.

In the first feature configured as described above, since the ratio of the difference between the maximum value and the minimum value of the pitches of the cutting teeth to the average value of the pitches is specified to be in the range of 40% to 100% (condition I), the intermittent vibration frequency between the cutting teeth is variable, and thus cutting vibration due to the cutting teeth is effectively inhibited. When the above ratio is less than 40%, the cutting vibration due to the cutting teeth becomes large except in the case of a condition III described later. As a result, the surface roughness of a finished surface becomes large. In addition, when the above ratio is greater than 100%, a finished surface partially becomes rough, and the cutting performance of the circular saw blade diminishes. As examples of the first feature, three Cases 1, 2, and 3 are indicated below.

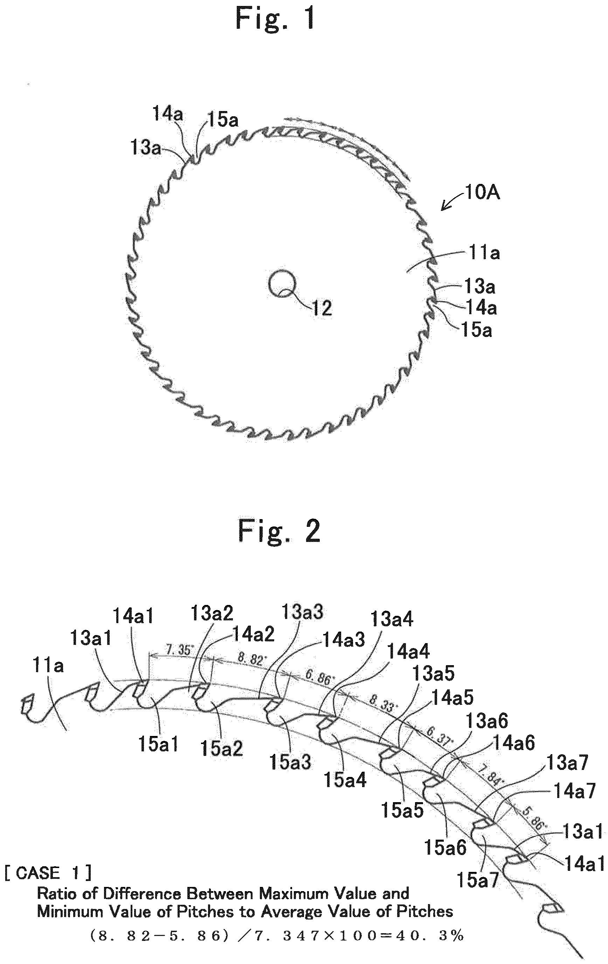

[Case 1] As shown in Fig. 1 and Fig. 2, cutting teeth 14a are joined to tooth bodies 13a projecting in the radial direction at 49 locations on the outer periphery of a metal base 11a (a vibration prevention mechanism in the metal base is not shown) of a circular saw blade 10A. The respective tooth bodies 13a are divided into seven sets each of which is a set of consecutive seven tooth bodies 13a1 to 13a7 having different intervals, and cutting teeth 14a1 to 14a7 are joined to mounting seats of the tooth bodies 13a1 to 13a7, respectively. The depths of gullets 15a1 to 15a7 between the tooth bodies 13a are equal to each other. The pitches of the seven cutting teeth 14a1 to 14a7 are 7.35°, 8.82°, 6.86°, 8.33°, 6.37°, 7.84°, and 5.86°, respectively. The sum of the pitches is 51.43°, and the average value of the pitches is 51.43°/7 = 7.347°. The difference between the maximum value and the minimum value of the pitches is 8.82° - 5.86° = 2 . 96°. The ratio of the difference between the maximum value and the minimum value of the pitches to the average value of the pitches is (2.96°/7.347°) × 100 = 40.3% and satisfies the above condition I.

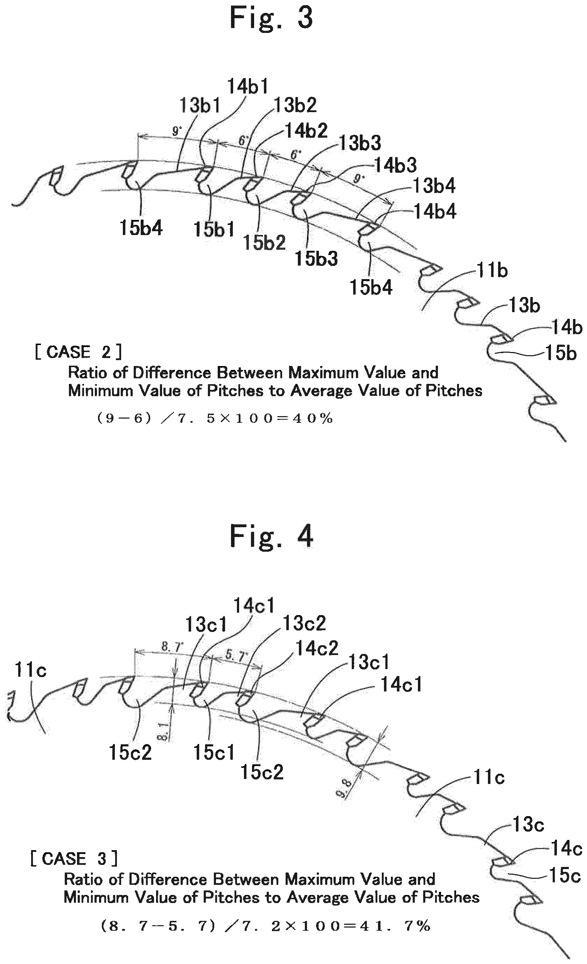

[Case 2] As shown in Fig. 3, cutting teeth 14b are joined to tooth bodies 13b at 48 locations on the outer periphery of a metal base 11b. The respective tooth bodies 13b are divided into 12 sets each of which is a set of consecutive four tooth bodies 13b1 to 13b4, and cutting teeth 14b1 to 14b4 are joined to mounting seats of the tooth bodies 13b1 to 13b4, respectively. The depths of gullets 15b1 to 15b4 between the tooth bodies 13b1 to 13b4 are equal to each other. The pitches of the four cutting teeth are 6°, 6°, 9°, and 9°, respectively. The sum of the pitches is 30°, and the average value of the pitches is 30°/4 = 7.5°. The difference between the maximum value and the minimum value of the pitches is 9° - 6° = 3°. The ratio of the difference between the maximum value and the minimum value of the pitches to the average value of the pitches is (3°/7.5°) × 100 = 40% and satisfies the above condition I.

[Case 3] As shown in Fig. 4, cutting teeth 14c are joined to tooth bodies 13c at 50 locations on the outer periphery of a metal base 11c. The respective tooth bodies 13c are divided into 25 sets each of which is a set of consecutive two tooth bodies 13c1 and 13c2 having different intervals, and cutting teeth 14c1 and 14c2 are joined to mounting seats of the tooth bodies 13c1 and 13c2, respectively. The pitches of the two cutting teeth 14c1 and 14c2 are 5.7° and 8.7°, respectively. The sum of the pitches is 14.4°, and the average value of the pitches is 14.4°/2 = 7.2°. The difference between the maximum value and the minimum value of the pitches is 8.7° - 5.7° = 3°. The ratio of the difference between the maximum value and the minimum value of the pitches to the average value of the pitches is (3° / 7.2°) × 100 = 41. 7% and satisfies the above condition I. Regarding gullets 15c, adjacent two gullets 15c1 and 15c2 having depths of 8.1 mm and 9.8 mm, respectively, are repeated. The average value of the depths of the gullets 15c is (9.8 mm + 8.1 mm) /2 = 8.95 mm, and the maximum value and the minimum value of the average values of the depths of the adjacent gullets 15c are 8.95 mm and equal to each other. As a result, the ratio of the difference between the maximum value and the minimum value of the average values of the depths of the adjacent gullets 15c to the average value of the depths of the gullets 15c is 0%. The depth of each gullet is the difference between the radius of the outermost circumference of the edge tips and the radius of the tooth bottom (the position in the gullet that is closest to the rotation center of the circular saw blade). In the case of a circular saw blade having a combination of teeth having different radii, the difference between the radius of the outermost circumference of the teeth forming a finished surface and the radius of the tooth bottom is defined as a gullet depth.

A second feature of the present invention is a circular saw blade in which cutting teeth are joined to a plurality of tooth bodies projecting outward in a radial direction at a plurality of locations on an outer periphery of a disk-shaped metal base, gullets are provided between the plurality of tooth bodies so as to be recessed in the radial direction, radial clearance angles of side cutting edges of the cutting teeth are greater than -1° and less than 1°, and a vibration prevention mechanism forpreventingvibrationof the metal base itself is provided, wherein depths of the multiple gullets are at least partially different, and a ratio of a difference between a maximum value and a minimum value of average values of depths of the adjacent gullets to an average value of the depths of the gullets is 20% to 100%. Particularly, two or more deep gullets or shallow gullets are preferably consecutive.

In the second feature configured as described above, since the ratio of the difference between the maximum value and the minimum value of the average values of the depths of the adjacent gullets to the average value of the depths of the gullets is specified to be in the range of 20% to 100% (condition II), the natural vibration frequency of each cutting tooth portion is variable, and thus cutting vibration due to the cutting teeth is inhibited. When the above ratio is less than 20%, the cutting vibration due to the cutting teeth becomes a problem except in the case of the condition III described later. As a result, the surface roughness of a finished surface becomes large. In addition, when the above ratio is greater than 100%, the gullets are deep and thus the strength of the metal base of the circular saw blade decreases, or the gullets are shallow and thus become clogged with offcuts. As an example of the second feature, Case 4 is indicated below.

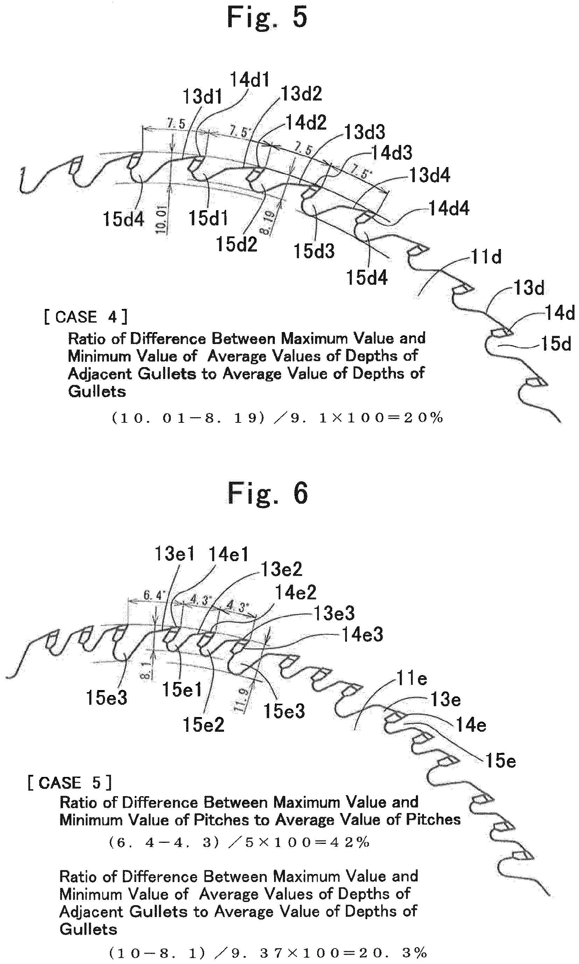

[Case 4] As shown in Fig. 5, cutting teeth 14d are joined to tooth bodies 13d at 48 locations on the outer periphery of a metal base 11d. Regarding gullets 15d provided between the tooth bodies 13d, two sets each of which is a set of adjacent two gullets, that is, a set of gullets 15d1 and 15d2 having a depth of 8.19 mm and a set of gullets 15d3 and 15d4 having a depth of 10.01 mm, are alternately repeated. The pitches of cutting teeth 14d1 to 14d4 joined to the tooth bodies 13d1 to 13d4 are 7.5° and equal to each other. The average value of the depths of the gullets 15d1 to 15d4 is (8.19 mm + 8.19 mm + 10.01 mm + 10.01 mm) /4 = 9.1 mm, the maximum value of the average values of the depths of the adjacent gullet is 10.01 mm, and the minimum value thereof is 8.19 mm. As a result, the ratio of the difference between the maximum value and the minimum value of the average values of the depths of the adjacent gullets 15d to the average value of the depths of the gullets 15d is (10.01 mm - 8.19 mm) / 9.1 mm × 100 = 20% and satisfies the above condition II.

Next, Case 5 is indicated as an example having a combination of the first and second features.

[Case 5] As shown in Fig. 6, cutting teeth 14e are joined to tooth bodies 13e at 72 locations on the outer periphery of a metal base 11e. The respective tooth bodies 13e are divided into 24 sets each of which is a set of consecutive three tooth bodies 13e1, 13e2, and 13e3, and cutting teeth 14e1 to 14e3 are joined to mounting seats of the tooth bodies 13e1 to 13e3, respectively. The pitches of the respective tooth bodies 13e1 to 13e3 are repeated as 4.3°, 4.3°, and 6.4°, respectively. The sum of the pitches is 15°, and the average value of the pitches is 15°/3 = 5°. The difference between the maximum value and the minimum value of the pitches is 6.4° - 4.3° = 2.1°. The ratio of the difference between the maximum value and the minimum value of the pitches to the average value of the pitches is (2.1°/5°) × 100 = 42%. Regarding gullets 15e provided at 72 locations on the outer periphery of the metal base 11e, adjacent three gullets 15e1, 15e2, and 15e3 having depths of 8.1 mm, 8.1 mm, and 11.9 mm, respectively, are repeated. The average value of the depths of the gullets 15e is (11. 9 mm + 8.1 mm + 8.1 mm) /3 = 9.37 mm, and the maximum value of the average values of the depths of the adjacent gullets 15e is 10 mm, and the minimum value thereof is 8.1 mm. As a result, the ratio of the difference between the maximum value and the minimum value of the average values of the depths of the adjacent gullets 15e to the average value of the depths of the gullets 15e is (10 mm - 8.1 mm)/9.37 mm × 100 = 20.3%. When these are combined, the above conditions I and II are satisfied.

A third feature of the present invention is a circular saw blade in which cutting teeth are joined to a plurality of tooth bodies projecting outward in a radial direction at a plurality of locations on an outer periphery of a disk-shaped metal base, gullets are provided between the plurality of tooth bodies so as to be recessed in the radial direction, radial clearance angles of side cutting edges of the cutting teeth are greater than -1° and less than 1°, and a vibration prevent ion mechanism for preventing vibration of the metal base itself is provided, wherein pitches of the multiple cutting teeth are at least partially different, depths of the multiple gullets are at least partially different, a ratio of a difference between a maximum value and a minimum value of the pitches to an average value of the pitches is 20% to 100%, and a ratio of a difference between a maximum value and a minimum value of average values of depths of the adjacent gullets to an average value of the depths of the gullets is 10% to 100%. Particularly, two or more deep gullets or shallow gullets are preferably consecutive.

In the third feature configured as described above, since the ratio of the difference between the maximum value and the minimum value of the pitches of the cutting teeth to the average value of the pitches is 20% to 100% and also the ratio of the difference between the maximum value and the minimum value of the average values of the depths of the adjacent gullet to the average value of the depths of the gullets is specified to be in the range of 10% to 100% (condition III), the intermittent vibration frequency between the cutting teeth and the natural vibration frequency of each tooth portion are variable, and thus cutting vibration due to the cutting teeth themselves is inhibited. The intermittent vibration frequency between the cutting teeth is a vibration frequency during intermittent cutting by the cutting teeth. The tooth portions are the tooth bodies to which the cutting teeth are joined. The natural vibration frequencies of the respective tooth portions are changed by changing the pitches of the cutting teeth and the depths of the gullets. As an example of the third feature, Case 6 is indicated below.

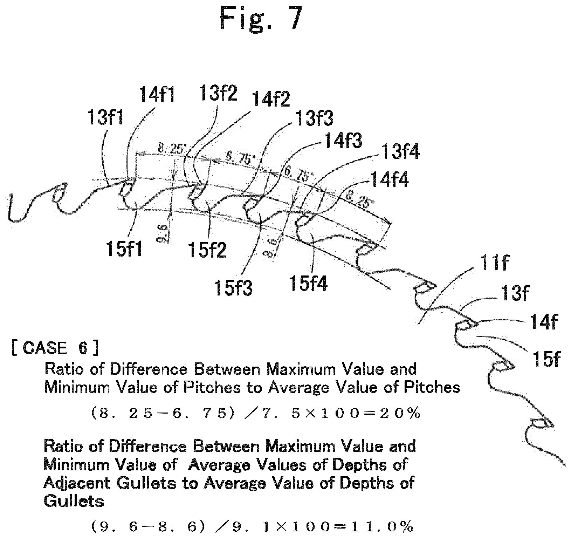

[Case 6] As shown in Fig. 7, cutting teeth 14f are joined to tooth bodies 13f at 48 locations on the outer periphery of a metal base 11f. The tooth bodies 13f are divided into 12 sets each of which is a set of two tooth bodies 13f1 and 13f2 having intervals equal to each other and two tooth bodies 13f3 and 13f4 having intervals that are equal to each other and are different from those of the tooth bodies 13f1 and 13f2, and cutting teeth 14f1 to 14f4 are joined to the tooth bodies 13f1 to 13f4, respectively. The cutting teeth 14f1 to 14f4 have pitches of 8.25°, 6.75°, 6.75°, and 8.25°, respectively. The sum of the pitches is 30°, and the average value of the pitches is 30°/4 = 7.5°. The difference between the maximum value and the minimum value of the pitches is 8.25° - 6.75° = 1.5°. The ratio of the difference between the maximum value and the minimum value of the pitches to the average value of the pitches is (1.5°/7.5°) × 100 = 20%. Regarding gullets 15f provided at 48 locations on the outer periphery of the metal base 11f, the depths of the gullets are repeated as 9.6 mm, 8.6 mm, 8.6 mm, and 9.6 mm. The average value of the depths of the gullets is (9.6 mm + 8.6 mm + 8.6 mm + 9.6 mm)/4 = 9.1 mm. The average values of the depths of the adjacent gullets is (9.6 mm + 8.6 mm)/2 = 9.1 mm, (8.6 mm + 8.6 mm)/2 = 8.6 mm, (8.6 mm + 9.6 mm)/2 = 9.1 mm, and (9.6 mm + 9.6 mm)/2 = 9.6 mm, the maximum value thereof is 9.6 mm, and the minimum value thereof is 8.6 mm. As a result, the ratio of the difference between the maximum value and the minimum value of the average values of the depths of the adjacent gullets to the average value of the depths of the gullets is (9.6 mm - 8.6 mm) /9.1 mm × 100 = 11.0%. When these are combined, the above condition III is satisfied.

Preferably, a bending point is provided at an intermediate point of each side cutting edge of the cutting teeth, a radial clearance angle at an outer peripheral side from the bending point is greater than -1° and less than 0°, and a radial clearance angle at a center side from the bending point is greater than 0° and less than 1°. In this case, cutting resistance increases and a load on the tooth portions and the like increases, but the effect of inhibiting cutting vibration is further exerted. As a result, the finish of a cut section is made satisfactory.

In the present invention, since the pitches of the cutting teeth and the depths of the gullets between the tooth bodies of the circular saw blade are set so as to satisfy any of the above conditions I, II, and III, cutting vibration due to the cutting teeth themselves is inhibited by making the intermittent vibration frequency between the cutting teeth and/or the natural vibration frequency of each tooth portion different. Thus, cutting vibration of the circular saw blade is assuredly inhibited in combination with the vibration prevention mechanism that prevents vibration due to the metal base itself. As a result, in the present invention, with the circular saw blade in which the radial clearance angles of the side cutting edges of the cutting teeth are greater than -1° and less than 1°, a satisfactory cut surface is ensured while cutting vibration is inhibited.

### Brief Description of Drawings

Fig. 1 is an overall view for explaining Case 1 of a circular saw blade according to claim 1 of the present invention;
Fig. 2 is a partially enlarged view showing apart of the circular saw blade of Case 1 in an enlarged manner;
Fig. 3 is a partially enlarged view showing a part of a circular saw blade of Case 2 in an enlarged manner;
Fig. 4 is a partially enlarged view showing a part of a circular saw blade of Case 3 in an enlarged manner;
Fig. 5 is a partially enlarged view showing a part of a circular saw blade in an enlarged manner for explaining Case 4 of a circular saw blade according to claim 2 of the present invention;
Fig. 6 is a partially enlarged view showing a part of a circular saw blade in an enlarged manner for explaining Case 5 of a circular saw blade according to claims 1 and 2 of the present invention;
Fig. 7 is a partially enlarged view showing a part of a circular saw blade in an enlarged manner for explaining Case 6 of a circular saw blade according to claim 3 of the present invention;
Fig. 8 is an overall view showing a circular saw blade according to Embodiment 1;
Fig. 9A is an enlarged front view showing a cutting tooth fixed to a tooth body in an enlarged manner;
Fig. 9B is an enlarged side view showing the cutting tooth fixed to the tooth body in an enlarged manner;
Fig. 10 is an overall view showing a circular sawblade according to Embodiment 2; and
Fig. 11 is an overall view showing a circular saw blade according to Embodiment 3.

### Description of Embodiments

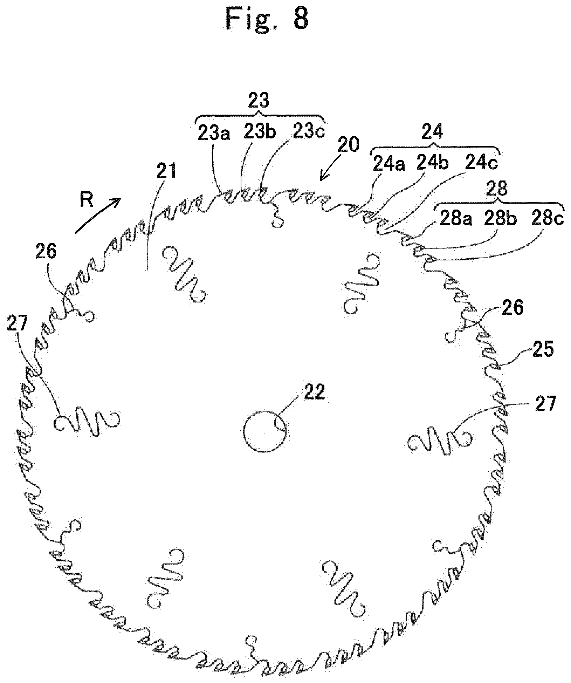

Hereinafter, embodiments of the present invention are described with reference to the drawings. Fig. 8 shows an overall view of a circular saw blade 20 according to Embodiment 1. A metal base 21 forming a part of the circular saw blade 20 is a disk-shaped thin plate made of steel and having an outer diameter of 305 mm and a tooth thickness of 2.8 mm, and a central hole 22 into which a rotary shaft of machining equipment is inserted is provided at the center of the metal base 21. At the outer peripheral side of the metal base 21, tooth bodies 23 having a substantially rhombic shape are provided at 72 locations in the circumferential direction so as to project in the radial direction, and gullets 24 are provided so as to be recessed in the radial direction by cutting portions between the respective tooth bodies 23 into an arc shape. A mounting seat 25 for mounting a cutting tooth 28 is provided at a front end side, in a rotation direction R, of each tooth body 23 by cutting the tooth body 23 substantially at a right angle.

Regarding the respective tooth bodies 23, adjacent three tooth bodies 23a, 23b, and 23c are defined as one set, and 24 sets are provided in total. The pitches of the cutting teeth 28 in each set are set to 4°, and the pitch between each set is set to 7°. The depths of gullets 24a, 24b, and 24c between the tooth bodies 23a, 23b, and 23c of one set are set to 7.9 mm, 7.9 mm, and 9.8 mm, respectively. At the outer peripheral side of the metal base 21, six wavy outer slots 26 are provided at six locations, that is, each provided every four sets of the tooth bodies 23, so as to extend toward the center. In addition, six inner slots 27 are provided between the respective outer slots 26 so as to extend in a wavy manner toward the center from positions away from the outer periphery. These slots 26 and 27 are filled with a resin, and thus serve as a vibration prevention mechanism for inhibiting vibration due to the metal base 21 of the circular saw blade 20.

The cutting teeth 28 are welded to the mounting seats 25 by means of brazing or the like. Each cutting tooth 28 is obtained by processing using a hard material such as cemented carbide, has an elongated substantially rectangular parallelepiped shape as shown in Fig. 9A and Fig. 9B, and is formed in a shape that allows the cutting tooth 28 to be substantially in close contact with the mounting seat 25. The cutting tooth 28 has a front face (rake face) 28r slanted at a rake angle ϕ, a back face 28s substantially parallel to the front face 28r, an upper face (flank face) 28t that is an slanted surface slanted at a top clearance angle ψ, and a bottom face 28u substantially perpendicular to the front face 28r. A front end cutting edge 28v is formed between the upper face 28t and the rake face 28r. Side cutting edges 28w at both side faces 28x in the width direction of the cutting tooth 28 each have a radial clearance angle that satisfies -1° < θ1 ≤ 0° or is 0° or negative, in the area from the upper face 28t to a bending point K at the intermediate point, and each have a positive radial clearance angle that satisfies 0° < θ2 < 1°, in the area from the bending point K to the bottom face 28u.

In Embodiment 1, the pitches of three cutting teeth 28a, 28b, and 28c are 4°, 4°, and 7°, respectively, so that the sum of the pitches is 15°, the average value of the pitches is 15/3 = 5°, and the difference between the maximum value and the minimum value of the pitches is 7° - 4° = 3°. The ratio of the difference between the maximum value and the minimum value of the pitches to the average value of the pitches is 3°/5° × 100 = 60%. In addition, the depths of the gullets 24a, 24b, and 24c between the three tooth bodies 23a, 23b, and 23c are 7.9 mm, 7.9 mm, and 9.8 mm, respectively, so that the sum of the depths of the gullets 24a, 24b, and 24c is 25.6 mm and the average value of the depths is 8.533 mm. The average values of the depths of the adjacent gullets 24a, 24b, and 24c are 7.9 mm, 8.85 mm, and 8.85 mm, the maximum value thereof is 8.85 mm, and the minimum value thereof is 7.9 mm. As a result, the ratio of the difference between the maximum value and the minimum value of the average values of the depths of the adjacent gullets to the average value of the depths of the gullets 24a, 24b, and 24c is (8.85 mm - 7.9 mm)/8.533 mm × 100 = 11.1%.

As described above, the pitches of the cutting teeth 28 and the depths of the gullets 24 satisfy the above conditions I and III, the intermittent vibration frequency between the cutting teeth 28 and the natural vibration frequency of each tooth portion are variable, and thus cutting vibration due to the cutting teeth 28 is inhibited. As a result, regarding the circular saw blade 20 according to the Embodiment 1, cutting vibration due to the cutting teeth themselves is inhibited by making the intermittent vibration frequency between the cutting teeth 28 and the natural vibration frequency of each tooth portion different, and cutting vibration of the circular saw blade 20 is assuredly inhibited in combination with the vibration prevention mechanism that prevents vibration of the metal base 21. As a result, in Embodiment 1, with the circular saw blade 20 in which the radial clearance angles of the side cutting edges of the cutting teeth 28 are greater than -1° and less than 1°, the surface roughness of a finished surface of a work material is decreased while cutting vibration is inhibited. Particularly, when the radial clearance angle θ1 at the outer peripheral side is greater than -1° and less than 0° and the radial clearance angle θ2 at the center side from the bending point K is greater than 0° and less than 1° in order to improve the finish of a cut section, cutting resistance increases and a load on the cutting tooth portions and the like increases, but the effect of inhibiting cutting vibration is further exerted.

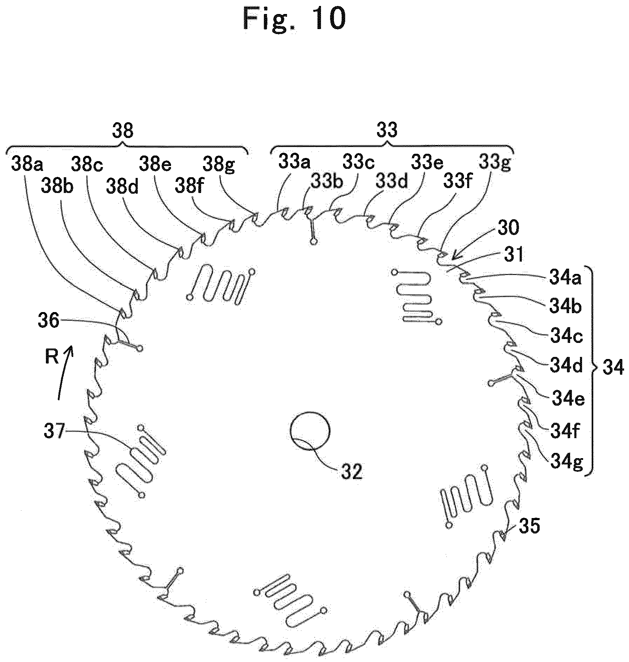

Next, Embodiment 2 is described with reference to Fig. 10.

Fig. 10 shows an overall view of a circular sawblade 30 according to Embodiment 2. A metal base 31 forming a part of the circular saw blade 30 is a disk-shaped thin plate made of steel and having an outer diameter of 305 mm and a tooth thickness of 2.0 mm, and a central hole 32 into which a rotary shaft of machining equipment is inserted is provided at the center of the metal base 31. At the outer peripheral side of the metal base 31, toothbodies 33 are provided at 49 locations in the circumferential direction so as to project in the radial direction in a substantially rhombic shape, and gullets 34 are provided so as to be recessed in the radial direction by cutting portions between the tooth bodies 33 into an arc shape. A mounting seat 35 for mounting a cutting tooth 38 that is similar to the above cutting tooth 28 is provided at a front end side, inarotationdirection R, of each tooth body 33 by cutting the tooth body 33 substantially at a right angle. The cutting tooth 38 that is similar to the above cutting tooth 28 is fixed to the mounting seat 35 by means of brazing or the like.

Regarding the respective tooth bodies 33, adjacent seven tooth bodies 33a to 33g are defined as one set, and seven sets are provided in total. The pitches of cutting teeth 38a to 38g in each set are set to 5.86°, 7.35°, 8.82°, 6.86°, 8.33°, 6.37°, and 7.84°, respectively. The depths of gullets 34a to 34g between the tooth bodies 33a to 33g of one set are set to 8.2 mm, 8.5 mm, 8.8 mm, 9.0 mm, 9.3 mm, 9.6 mm, and 9.8 mm, respectively. At the outer peripheral side of the metal base 31, five outer slots 36 are provided at five locations spaced at equal intervals in the circumferential direction so as to extend toward the center, and five inner slots 37 are provided between the respective outer slots 36 so as to extend in a wavy manner toward the center from positions away from the outer periphery. The inner slots 37 are filled with a resin, and the slots 36 and 37 serve as a vibration prevention mechanism for inhibiting cutting vibration due to the metal base 31.

In Embodiment 2, the sum of the pitches of the seven cutting teeth 38a to 38g is 51.43°, the average value of the pitches is 51.43°/7 = 7.35°, and the difference between the maximum value and the minimum value of the pitches is 8.82° - 5.86° = 2.96°. The ratio of the difference between the maximum value and the minimum value of the pitches to the average value of the pitches is 2.96°/7.35° × 100 = 40.3%. In addition, the sum of the depths of the gullets 34a to 34g between the seven cutting teeth 38a to 38g is 63.2 mm, and the average value of the depths is 63.2/7 = 9.03 mm. The average values of the depths of the adjacent gullets 34a to 34g are 8.35 mm, 8.65 mm, 8.9 mm, 9.15 mm, 9.45 mm, 9.7 mm, and 9.0 mm, respectively, and the differences between the maximum value and the minimum value of the average values is 9.7 mm - 8.35 mm = 1.35 mm. As a result, the ratio of the difference between the maximum value and the minimum value of the average values of the depths of the adjacent gullets 38 to the average value of the depths of the gullets 38 is 1. 35 mm/9.03 mm × 100 = 15.0%.

As described above, the pitches of the cutting teeth 38 and the depths of the gullets 34 satisfy the above conditions I and III, the intermittent vibration frequency between the cutting teeth 38 and the natural vibration frequency of each tooth portion are variable, and thus cutting vibration due to the cutting teeth 38 is inhibited. As a result, regarding the circular saw blade 30 according to the Embodiment 2, cutting vibration due to the cutting teeth themselves is inhibited by making the intermittent vibration frequency between the cutting teeth 38 and the natural vibration frequency of each tooth portion different, and cutting vibration of the circular saw blade 30 is assuredly inhibited in combination with the vibration prevention mechanism that prevents vibration of the metal base 31. As a result, in Embodiment 2, with the circular saw blade 30 in which the radial clearance angles of the side cutting edges of the cutting teeth 38 are greater than -1° and less than 1°, a satisfactory finished surface of a work material having small surface roughness is ensured while cutting vibration is inhibited. Particularly, when the radial clearance angle θ1 at the outer peripheral side is greater than -1° and less than 0° and the radial clearance angle θ2 at the center side from the bending point K is greater than 0° and less than 1° in order to improve the finish of a cut section, cutting resistance increases and a load on the tooth portions and the like increases, but the effect of inhibiting cutting vibration is further exerted.

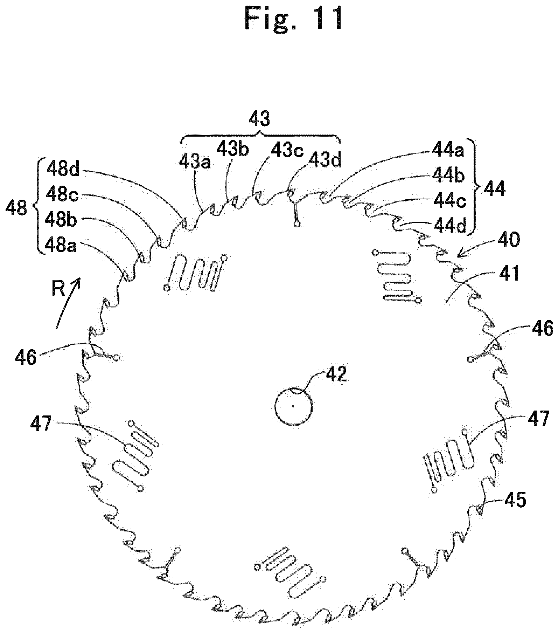

Next, Embodiment 3 is described with reference to Fig. 11.

An overall view of a circular saw blade 40 according to Embodiment 3 is shown. A metal base 41 forming a part of the circular saw blade 40 is a disk-shaped thin plate made of steel and having an outer diameter of 305 mm and a tooth thickness of 2.0 mm, and a central hole 42 into which a rotary shaft of machining equipment is inserted is provided at the center of the metal base 41. At the outer peripheral side of the metal base 41, tooth bodies 43 are provided at 48 locations in the circumferential direction so as to project in the radial direction in a substantially rhombic shape, and gullets 44 are provided so as to be recessed in the radial direction by cutting portions between the tooth bodies 43 into an arc shape. A mounting seat 45 for mounting a cutting tooth 48 is provided at a front end side, in a rotation direction R, of each tooth body 43 by cutting the tooth body 43 substantially at a right angle. The cutting tooth 48 that is similar to the above cutting tooth 28 is fixed to the mounting seat 45 by means of brazing or the like.

Regarding the respective toothbodies 43, adjacent four tooth bodies 43a to 43d are defined as one set, and 12 sets are provided in total. The pitches of cutting teeth 48a to 48d in each set are set to 6.5°, 6.5°, 8.5°, and 8.5°, respectively. The depths of gullets 44a to 44d between the tooth bodies 43a to 43d of one set are set to 8.6 mm, 8.6 mm, 9.7 mm, and 9.7 mm, respectively. At the outer peripheral side of the metal base 41, five outer slots 46 are provided at five locations spaced at equal intervals in the circumferential direction so as to extend toward the center, and five inner slots 47 are provided between the respective outer slots 46 so as to extend in a wavy manner toward the center from positions away from the outer periphery. The inner slots 47 are filled with a resin, and these slots 46 and 47 serve as a vibration prevention mechanism for inhibiting vibration of the circular saw blade 40 due to the metal base 41.

In Embodiment 3, the sum of the pitches of the four cutting teeth 48a to 48d is 30°, the average value of the pitches is 30°/4 = 7.5°, and the difference between the maximum value and the minimum value of the pitches is 8.5° - 6.5° = 2°. The ratio of the difference between the maximum value and the minimum value of the pitches to the average value of the pitches is 2°/7.5° × 100 = 26.7%. In addition, the sum of the depths of the four gullets 44a to 44d is 36.6 mm, and the average value of the depths is 36.6 mm/4 = 9.15 mm. The average values of the depths of the adjacent gullets are 8.6 mm, 9.15 mm, 9.7mm, and 9.15 mm, respectively, and the difference between the maximum value and the minimum value of the average values is 9.7 mm - 8.6 mm = 1.1 mm. As a result, the ratio of the difference between the maximum value and the minimum value of the average values of the depths of the adjacent gullets to the average value of the depths of the gullets is 1.1 mm/9.15 mm × 100 = 12.0%.

As described above, the pitches of the cutting teeth 48 and the depths of the gullets 44 satisfy the above condition III, the intermittent vibration frequency between the cutting teeth 48 and the natural vibration frequency of each tooth portion are variable, and thus cutting vibration due to the cutting teeth 48 is inhibited. As a result, regarding the circular saw blade 40 according to the Embodiment 3, cutting vibration due to the cutting teeth themselves is inhibited by making the intermittent vibration frequency between the cutting teeth 48 and the natural vibration frequency of each tooth portion different, and cutting vibration of the circular saw blade 40 is assuredly inhibited in combination with the vibration prevention mechanism that prevents vibration of the metal base 41. As a result, in Embodiment 3, with the circular saw blade 40 in which the radial clearance angles of the side cutting edges of the cutting teeth 48 are greater than -1° and less than 1°, a satisfactory finished surface of a work material having small surface roughness is ensured while cutting vibration is inhibited. Particularly, when the radial clearance angle θ1 at the outer peripheral side is greater than -1° and less than 0° and the radial clearance angle θ2 at the center side from the bending point K is greater than 0° and less than 1° in order to improve the finish of a cut section, cutting resistance increases and a load on the tooth portions and the like increases, but the effect of inhibiting cutting vibration is further exerted.

Next, a specific cutting test example using circular saw blades is described.

A cutting test was conducted in which the circular saw blades of Cases 1 to 6 described above were used, 16 types of rotation speeds were set from 3000 rpm to 6000 rpm at intervals of 200 rpm as rotation speeds N of cutting, and Japanese hemlock was used as a work material. For comparison, a circular saw blade in which the ratio of the difference between the maximum value and the minimum value of the pitches to the average value of the pitches and the ratio of the difference between the maximum value and the minimum value of the average values of the depths of the adjacent gullets to the average value of the depths of the gullets are each 0%, was used as a conventional example. The results of cutting were evaluated through visual observation, "o" indicates that the surface roughness of a finished surface (cut section) is very small and satisfactory, "×" indicates that the surface roughness of a finished surface is large and defective, and "Δ" indicates that the surface roughness of a finished surface is satisfactory to some extent. The results of the cutting test are shown in Table 1 below. In Table 1, the ratio of the difference between the maximum value and the minimum value of the pitches to the average value of the pitches is represented as "pitch difference ratio", and the ratio of the difference between the maximum value and the minimum value of the average values of the depths of the adjacent gullets to the average value of the depths of the gullets is represented as "gullet depth difference ratio".

**[Table 1]**

| | Pitch differ -ence ratio (%) | Gullet depth difference ratio (%) | Rotation speed N (rpm) | | | | | | | | | | | | | | | |
|---|---|---|---|---|---|---|---|---|---|---|---|---|---|---|---|---|---|---|
| | | | 3000 | 3200 | 3400 | 3600 | 3800 | 4000 | 4200 | 4400 | 4600 | 4800 | 5000 | 5200 | 5400 | 5600 | 5800 | 6000 |
| Case 1 | 40.3 | 0 | ○ | ○ | ○ | ○ | ○ | ○ | ○ | ○ | ○ | ○ | ○ | ○ | ○ | ○ | ○ | ○ |
| Case 2 | 40.0 | 0 | ○ | ○ | ○ | ○ | ○ | ○ | ○ | ○ | ○ | Δ | ○ | ○ | ○ | Δ | ○ | ○ |
| Case 3 | 41.7 | 0 | ○ | ○ | ○ | ○ | ○ | ○ | ○ | ○ | ○ | ○ | ○ | ○ | ○ | ○ | ○ | ○ |
| Case 4 | 0 | 20.0 | ○ | ○ | ○ | ○ | ○ | ○ | ○ | ○ | ○ | ○ | ○ | ○ | ○ | ○ | ○ | ○ |
| Case 5 | 42.0 | 20.3 | ○ | ○ | ○ | ○ | ○ | ○ | ○ | ○ | ○ | ○ | ○ | ○ | ○ | ○ | ○ | ○ |
| Case 6 | 20.0 | 11.0 | ○ | ○ | ○ | ○ | ○ | ○ | ○ | ○ | ○ | ○ | ○ | ○ | ○ | ○ | ○ | ○ |
| Conventional example | 0 | 0 | Δ | ○ | ○ | ○ | Δ | ○ | × | × | × | × | × | Δ | Δ | ○ | ○ | ○ |

As is obvious from Table 1, regarding Cases 1 and 3 to 6, the surface roughness of the finished surface was very small at all the rotation speeds, and satisfactory results were obtained. Also regarding Case 2, the surface roughness of the finished surface was satisfactory to some extent at only two points of 4800 rpm and 5600 rpm, and very good results were obtained as a whole. On the other hand, the conventional example has "×" at 4200 rpm to 5000 rpm, which is a problem, since the rotation speed in this range is particularly a range used normally in a circular saw blade. As a result, a satisfactory finished surface having small surface roughness was obtained through cutting with the circular saw blade to which the present invention was applied, and the present invention was shown to be effective.

In the embodiments described above, as the vibration prevention mechanism for preventing vibration of the metal base, the slots filled with the resin are used, but a vibration prevention plate or the like may be attached to the metal base instead. Moreover, in the embodiments, the cutting teeth are fixed by means of brazing, but the means for fixing the cutting teeth is not limited thereto and may be resistance welding, a high-powered beam such as a laser, or the like. Additionally, the embodiments described above are merely examples, and various changes may be made without departing from the gist of the present invention.

### Reference Numerals

10,20,30,40 circular saw blade
11, 21, 31, 41 metal base
13a to 13f, 23, 23a to 23c, 33, 33a to 33g, 43, 43a to 43d tooth body
14a to 14f, 28, 28a to 28c, 38, 38a to 38g, 48, 48a to 48d cutting teeth
15a to 15f, 24, 24a to 24c, 34, 34a to 34g, 44, 44a to 44d gullet
26, 36, 46 outer slot
27, 37, 47 inner slot

## Claims

1. A circular saw blade in which cutting teeth are joined to a plurality of tooth bodies projecting outward in a radial direction at a plurality of locations on an outer periphery of a disk-shaped metal base, gullets are provided between the plurality of tooth bodies so as to be recessed in the radial direction, radial clearance angles of side cutting edges of the cutting teeth are greater than -1° and less than 1°, and a vibration prevention mechanism for preventing vibration of the metal base itself is provided, wherein
pitches of the multiple cutting teeth are at least partially different, and a ratio of a difference between a maximum value and a minimum value of the pitches to an average value of the pitches is 40% to 100%.

2. A circular saw blade in which cutting teeth are joined to a plurality of tooth bodies projecting outward in a radial direction at a plurality of locations on an outer periphery of a disk-shaped metal base, gullets are provided between the plurality of toothbodies so as to be recessed in the radial direction, radial clearance angles of side cutting edges of the cutting teeth are greater than -1° and less than 1°, and a vibration prevention mechanism for preventing vibration of the metal base itself is provided, wherein
depths of the multiple gullets are at leastpartiallydifferent, and a ratio of a difference between a maximum value and a minimum value of average values of depths of the adjacent gullets to an average value of the depths of the gullets is 20% to 100%.

3. A circular saw blade in which cutting teeth are joined to a plurality of tooth bodies projecting outward in a radial direction at a plurality of locations on an outer periphery of a disk-shaped metal base, gullets are provided between the plurality of tooth bodies so as to be recessed in the radial direction, radial clearance angles of side cutting edges of the cutting teeth are greater than -1° and less than 1°, and a vibration prevention mechanism for preventing vibration of the metal base itself is provided, wherein
pitches of the multiple cutting teeth are at least partially different, depths of the multiple gullets are at least partially different, a ratio of a difference between a maximum value and a minimum value of the pitches to an average value of the pitches is 20% to 100%, and a ratio of a difference between a maximum value and a minimum value of average values of depths of the adj acent gullets to an average value of the depths of the gullets is 10% to 100%.

4. The circular saw blade according to any one of claims 1 to 3, wherein
a bending point is provided at an intermediate point of each side cutting edge of the cutting teeth, a radial clearance angle at an outer peripheral side from the bending point is greater than -1° and less than 0°, and a radial clearance angle at a center side from the bending point is greater than 0° and less than 1°.
